# Europäisches Patentamt

# European Patent Office

# Office européen des brevets

(19)

(11) Veröffentlichungsnummer: **0 119 313**
**A2**

(12) ## EUROPÄISCHE PATENTANMELDUNG

(21) Anmeldenummer: **83112626.3**

(22) Anmeldetag: **15.12.83**

(51) Int. Cl.³: **G 05 D 23/19, F 24 F 11/00**

(30) Priorität: **22.03.83 DE 3310367**

(43) Veröffentlichungstag der Anmeldung: **26.09.84**
**Patentblatt 84/39**

(84) Benannte Vertragsstaaten: **AT BE CH FR IT LI LU NL**

(71) Anmelder: **Viessmann Werke KG, Postfach 10,
D-3559 Allendorf/Eder (DE)**

(72) Erfinder: **Viessmann, Hans, Dr., Am Hain 24,
D-3559 Battenberg/Eder (DE)**
Erfinder: **Arend, Hans-Otto, Dipl.-Ing., Schulweg 23,
D-3559 Allendorf/Eder (DE)**

(74) Vertreter: **Patentanwälte Beetz sen. - Beetz jun. Timpe -
Siegfried - Schmitt-Fumian, Steinsdorfstrasse 10,
D-8000 München 22 (DE)**

(54) **Verfahren und Vorrichtung zur Einzelraumtemperaturregelung.**

(57) Die Erfindung betrifft ein Verfahren und eine Vorrichtung zur Einzelraumtemperaturregelung und ist für beliebige zentrale und dezentrale Raumheiz- und Klimatisierungssysteme anwendbar.

Bei der Heizung (Kühlung) von Räumen mit einer regelbaren Wärmequelle (Kältequelle) wird die Raumlufttemperatur sowie die Wandoberflächentemperatur gemessen und daraus eine Regelgröße erzeugt, die die Wärmequelle (Kältequelle) regelt.

Während der nichtstationären Aufheizphase (Kühlphase) wird die Raumlufttemperatur als Regelgröße verwendet und eine über (unter) der anfänglichen Wandoberflächentemperatur liegende Raumluft-Solltemperatur vorgegeben, bis die Wandoberflächentemperatur nur noch höchstens um eine vorgegebene Temperaturdifferenz niedriger (höher) als die Raumlufttemperatur ist.

Während der anschließenden quasistationären Regelphase wird die Wandoberflächentemperatur als Regelgröße verwendet und eine Wandoberflächen-Soll-Temperatur vorgegeben und die Wärmequelle (Kältequelle) dann eingeschaltet, wenn die Wandoberflächentemperatur unterhalb der Untergrenze (oberhalb der Obergrenze) der Schalthysterese liegt und dann abgeschaltet, wenn die Raumlufttemperatur die Obergrenze (Untergrenze) der Schalthysterese

überschreitet (unterschreitet) bzw. wenn die Wandoberflächentemperatur schon vor der Raumlufttemperatur ihren Sollwert erreicht hat.

Die Temperaturfühler für die Raumluft und für die Wandoberfläche sind einander dicht benachbart angeordnet und die Regeleinrichtung kann ein P-, PI- oder PID-Regler sein.

Viessmann Werke KG
D-3559 Allendorf (Eder)
--------------------------------

Verfahren und Vorrichtung zur Einzelraumtemperaturregelung

Die Erfindung betrifft ein Verfahren und eine Vorrichtung zur Einzelraumtemperaturregelung, die für beliebige zentrale oder dezentrale Raumheiz- und Klimatisierungssysteme anwendbar ist und eine wirtschaftlichere Energienutzung ermöglicht.

Die an sich selbstverständliche Forderung, Energie zur Raumheizung nur dann aufzuwenden, wenn tatsächlich Bedarf vorhanden ist, dh Räume nur dann auf die Solltemperatur aufzuheizen, wenn sie genutzt werden, bzw für jeden Raum individuell wählbare Solltemperaturen vorzugeben und zu halten, kann in der Praxis mit herkömmlichen Raumthermostaten oder Thermostatventilen an Heizkörpern in nur sehr unvollkommener Weise erfüllt werden, da herkömmliche Raumthermostate wie auch die Fühler von Thermostatventilen lediglich die Lufttemperatur des betreffenden Raumes erfassen, die ihrerseits insbesondere von den Wärmeübertragungsverhältnissen zwischen Wärmequelle wie zB Heizkörpern und Raumluft, den baulichen Gegebenheiten wie dem Wandmaterial und dessen K-Wert und Wärmekapazität, der Besonnung, dem Vorliegen von Fremdwärmequellen, der Belüftung durch geöffnete Türen und Fenster sowie durch Undichtigkeiten, der Inneneinrichtung und anderen Einflußgrößen abhängt, was bei den gegenwärtigen einfachen Zweipunkt- oder Dreipunktreglern, auch mit Rückführung, zu beachtlichen Totzeiten und relativ großer Trägheit der Temperaturregelung und vor allem zu einem erheblichen Überschießen der Lufttemperatur in beiden Richtungen um die Solltemperatur führen kann und gleichzeitig einen unnötigen Energieverbrauch zur Folge hat.

Besonders ungünstige Verhältnisse liegen mit den bisherigen Raumthermostaten bei Speicherheizungen, auch bei Fußbodenheizungen mit Speicherwirkung, vor, da bei diesen Systemen die Wärmeabgabe in annehmbar kurzen Zeiten nicht nennenswert geändert werden kann.

Herkömmliche Einzelraumtemperaturregelungen mit Raumluftthermostaten arbeiten daher unwirtschaftlich und sind zugleich auch hinsichtlich des Nutzungskomforts der Räume ungünstig.

Gleiches gilt auch für den umgekehrten Fall von Klimatisierungssystemen mit Raumkühlung.

Bei Räumen mit nicht innengedämmten Wänden ändert sich beim Abkühlen wie auch beim Aufheizen die Wandoberflächentemperatur erheblich langsamer als die Raumlufttemperatur, wobei die Differenz zwischen der Raumlufttemperatur und der Wandoberflächentemperatur im wesentlichen von der Wärmespeicherfähigkeit der Wände abhängt. Bei Wänden mit kleiner Wärmespeicherkapazität ändert sich die Wandoberflächentemperatur entsprechend schneller als bei Wänden mit hoher Wärmespeicherkapazität. Unabhängig davon ergibt sich an der Wandoberfläche eine gegenüber der Raumlufttemperatur 'geglättete' Wandoberflächentemperatur, die durch nur relativ kurzzeitige, auch starke Änderungen der Raumlufttemperatur, etwa durch Öffnen von Türen oder Fenstern, relativ wenig beeinflußt wird.

Demgemäß wurde bereits versucht, durch ein Raumtemperaturregelsystem mit zwei unabhängigen Temperaturfühlern, welche die Raumlufttemperatur und die Wandoberflächentemperatur erfassen, die Wärmespeicherkapazität der Wände bei der Regelung zu berücksichtigen, um so zB bei kurzzeitiger Verringerung der Raumlufttemperatur ein unnötig frühes Gegenheizen der Wärmequelle zu verhindern.

Bei diesem bekannten Raumtemperaturregelsystem wird als Regelgröße zum Schalten der Wärmequelle bzw zur Betätigung damit verbundener Stellglieder weder die Raumlufttemperatur wie bei den klassischen Regelsystemen noch die Wandoberflächentemperatur, sondern ein aus beiden Temperaturen durch vorgegebene Gewichtung gebildeter Mittelwert herangezogen.

Auch dieses Regelsystem hat jedoch den gravierenden Nachteil, daß bereits bei kurzzeitigem Unterschreiten des Sollwerts der Raumlufttemperatur auch und gerade bei annähernd konstanter Wandoberflächentemperatur, etwa beim Öffnen von Türen und Fenstern, das Regelsystem nach Maßgabe des gewichteten Eingangssignals anspricht und die Regelabweichung durch Gegenheizen auszugleichen versucht, obwohl die in den Wänden und ggf der Raumeinrichtung einschließlich Heizkörpern etc gespeicherte Wärmeenergie nach dem Entfallen der kurzzeitigen Störung ausreichen würde, den Sollwert der Raumlufttemperatur wenigstens annähernd wieder zu erreichen, was ingesamt zu einem unruhigen Regelverhalten und damit ungenügendem Heizkomfort führt, wenn von durch unnötiges Einschalten von Heizeinrichtungen und entsprechend ungünstigeren Wirkungsgrad hervorgerufenen zusätzlichen Energieverlusten einmal abgesehen wird.

Dieses ungünstige Regelverhalten läßt sich durch Änderung der Gewichtung der beiden Temperaturwerte zwar in einem gewissen Maße verbessern, jedoch liegt gerade darin der weitere Nachteil, daß die Gewichtung der Temperaturwerte von den jeweiligen Raum- und Heizungsverhältnissen in komplexer Weise abhängig ist und ihre Änderung und Einstellung im übrigen vom Anlagenbetreiber ein hohes technisches Verständnis erfordert, das bei der breiten Masse der Benutzer grundsätzlich nicht gegeben ist.

Der Erfindung liegt daher die Aufgabe zugrunde, ein Verfahren und eine Vorrichtung zur Einzelraumtemperaturregelung anzugeben, mit denen die Nachteile des Stands der Technik vermieden werden können und die eine einfache, wirtschaftliche und zugleich möglichst gleichmäßige, von starken Überschwingeffekten freie Einzelraumtemperaturregelung erlauben, ohne technische Anforderungen an die Benutzer zu stellen.

Die Aufgabe wird anspruchsgemäß gelöst.

Vorteilhafte Weiterbildungen sind Gegenstand der Unteransprüche.

Das erfindungsgemäße Verfahren beruht im Fall der Heizung von Räumen mit einer regelbaren Wärmequelle auf der Messung der Raumlufttemperatur sowie der Wandoberflächentemperatur, der Erzeugung einer Regelgröße unter Berücksichtigung der gemessenen Raumlufttemperatur und der gemessenen Wandoberflächentemperatur und der Regelung der Wärmequelle über diese Regelgröße und ist dadurch gekennzeichnet, daß

(A) in der nichtstationären Aufheizphase die Raumlufttemperatur unter Vorgabe einer über der anfänglichen Wandoberflächentemperatur liegenden Raumluft-Solltemperatur als Regelgröße herangezogen wird,

bis die Wandoberflächentemperatur nur noch höchstens um eine vorgegebene Temperaturdifferenz niedriger ist als die Raumluft-Solltemperatur,

und

(B) in der anschließenden quasistationären Regelphase

die Wandoberflächentemperatur unter Vorgabe einer Wandoberflächen-Solltemperatur als Regelgröße verwendet und die Wärmequelle dann eingeschaltet wird, wenn die Wandoberflächentemperatur unterhalb der Untergrenze der Schalthysterese liegt, und die Wärmequelle dann abgeschaltet wird, wenn die Raumlufttemperatur die Obergrenze der Schalthysterese überschreitet, bzw wenn die Wandoberflächentemperatur schon vor der Raumlufttemperatur ihren Sollwert erreicht hat.

Das erfindungsgemäße Verfahren beruht im Fall der Kühlung von Räumen unter Klimatisierung mit einer regelbaren Kältequelle auf der Messung der Raumlufttemperatur sowie der Wandoberflächentemperatur, der Erzeugung einer Regelgröße unter Berücksichtigung der gemessenen Raumlufttemperatur und der gemessenen Wandoberflächentemperatur und der Regelung der Kältequelle über diese Regelgröße und ist dadurch gekennzeichnet, daß

(A) in der nichtstationären Kühlphase die Raumlufttemperatur unter Vorgabe einer unter der anfänglichen Wandoberflächentemperatur liegenden Raumluft-Solltemperatur als Regelgröße herangezogen wird,

bis die Wandoberflächentemperatur nur noch höchstens um eine vorgegebene Temperaturdifferenz höher ist als die Raumluft-Solltemperatur,

und

(B) in der anschließenden quasistationären Regelphase

die Wandoberflächentemperatur unter Vorgabe einer Wandoberflächen-Solltemperatur als Regelgröße verwendet und die Kältequelle dann eingeschaltet wird, wenn die Wandoberflächentemperatur oberhalb der Obergrenze der Schalthysterese liegt, und die Kältequelle dann abgeschaltet wird, wenn die Raumlufttemperatur die Untergrenze der Schalthysterese unterschreitet bzw wenn die Wandoberflächentemperatur schon vor der Raumlufttemperatur ihren Sollwert erreicht hat.

Die vorgegebene Temperaturdifferenz in Schritt (A) ist vorzugsweise diejenige mittlere Temperaturdifferenz, die sich aufgrund der vorliegenden Wärme- bzw Kältequelle, der baulichen Gegebenheiten, der Wände und der Raumeinrichtung im quasistationären Zustand bei Verwendung der Raumlufttemperatur als Regelgröße zwischen der Raumluft-Solltemperatur und der Wandoberflächentemperatur ergibt. Sie entspricht günstigerweise 1 bis 2 K.

Sie kann ferner bevorzugt auch eine zwischen der Raumluft-Solltemperatur und im Fall der Heizung der Obergrenze und im Fall der Kühlung der Untergrenze der Schalthysterese der Stellgröße vorgegebene Temperaturdifferenz sein.

Die Schalthysterese der Raumlufttemperatur beträgt vorzugsweise ± 0,5 K um die Raumluft-Solltemperatur, die Schalthysterese der Wandoberflächentemperatur vorzugsweise ± 0,25 K um die Wandoberflächen-Solltemperatur.

Die erfindungsgemäße Vorrichtung umfaßt einen Raumlufttemperaturfühler, der die Temperatur der Raumluft erfaßt, einen Wandoberflächentemperaturfühler, der die Temperatur der Wandoberfläche erfaßt, und eine Regeleinrichtung, die aufgrund der durch den Raumlufttemperaturfühler und den Wandoberflächentemperaturfühler erfaßten Temperaturmeßwerte als Regelausgang eine Stellgröße liefert, mit der eine Wärme- und/oder Kältequelle ansteuerbar ist, und ist dadurch gekennzeichnet, daß

(1) der Raumlufttemperaturfühler und der Wandoberflächentemperaturfühler in räumlicher Nähe zueinander vorgesehen sind,

(2) der Raumlufttemperaturfühler in einem Abstand von etwa 20 mm von der Wandoberfläche vorgesehen ist,

(3) der Wandoberflächentemperaturfühler unmittelbar auf der Wandoberfläche anliegend vorgesehen ist

und

(4) die Regeleinrichtung so ausgebildet ist, daß sie

(A) in der nichtstationären Aufheiz- bzw Kühlphase die Raumlufttemperatur unter Vorgabe einer Raumluft-Solltemperatur als Regelgröße verwendet, bis die Wandoberflächentemperatur im Fall der Heizung höchstens um eine vorgegebene erste Temperaturdifferenz niedriger und im Fall der Kühlung höchstens um eine vorgegebene erste Temperaturdifferenz höher ist als die Raumluft-Soll- temperatur,

und

(B) in der anschließenden quasistationären Regelphase

die Wandoberflächentemperatur unter Vorgabe einer Wandoberflächen-Solltemperatur als Regelgröße verwendet und die Wärmequelle bzw Kältequelle dann eingeschaltet wird, wenn die Wandoberflächentemperatur im Fall der Heizung unterhalb der Untergrenze und im Fall der Kühlung oberhalb der Obergrenze der Schalthysterese liegt, und die Wärmequelle bzw Kältequelle dann abgeschaltet wird, wenn die Raumlufttemperatur im Fall der Heizung die Obergrenze der Schalthysterese überschreitet und im Fall der Kühlung die Untergrenze der Schalthysterese unterschreitet bzw in beiden Fällen wenn die Wandoberflächentemperatur schon vor der Raumlufttemperatur ihren Sollwert erreicht hat.

Der Regler der Regeleinrichtung ist vorzugsweise ein P-, PI- oder PID-Regler.

Die Regeleinrichtung ist bevorzugt mikroprozessorgesteuert und weist ein Erkennungs- und Umschaltprogramm zur Wahl der Temperaturfühler-Eingangssignale zur Erzeugung einer von den jeweiligen Betriebsbedingungen abhängigen Stellgröße auf.

Besonders günstig sind 'lernende' Regeleinrichtungen, die die sich unter verschiedenen Betriebsbedingungen ergebenden zeitlichen Temperaturverläufe und Temperaturgradienten bezüglich der beiden Temperaturfühler erfassen, speichern und zur Selbstoptimierung verwenden, so daß in diesem Fall lediglich werkseitige Programmvorgaben, jedoch keine bedienerseitigen Eingriffe mehr erforderlich sind.

Es ist ferner aus praktischer wie konstruktiver Sicht besonders günstig, wenn der Raumlufttemperaturfühler und der Wandoberflächentemperaturfühler innerhalb des gleichen Gehäuses in einem Abstand von nur einigen cm voneinander vorgesehen sind.

Das Erfindungskonzept wird im folgenden anhand der Raumheizung durch eine schalt- oder regelbare Wärmequelle näher erläutert. Analoges gilt für die temperaturmäßig umgekehrte, ebenfalls von den Ansprüchen umfaßte Klimatisierung durch Kühlung.

Grundgedanke ist gegenüber dem oben erläuterten Stand der Technik, daß der gegenüber dem Temperaturverlauf der Raumluft zeitlich geglättete Temperaturverlauf der Wandoberfläche erst dann zur Regelung herangezogen wird, wenn die Wandoberflächentemperatur nicht mehr allzu weit von der Raumluft-Solltemperatur entfernt ist, also erst nach einer instationären Aufheizphase, während der ausschließlich die Raumlufttemperatur als Regelgröße herangezogen wird, dh der zum Aufheizen der Wände erforderliche Temperaturgradient zwischen Raumlufttemperatur und Wandoberflächentemperatur erzeugt wird, ohne daß es zu einem allzu hohen Überschwingen der Raumlufttemperatur kommt, wie dies bei Regelung über die Wandoberflächentemperatur am Ende der Aufheizphase sonst der Fall wäre. In der anschließenden quasistationären Regelphase, die der eigentlichen Raumnutzungsphase entspricht, wird dann die sich zeitlich träger verhaltende Wandoberflächentemperatur als Regelgröße herangezogen.

Durch geeignete regeltechnische Maßnahmen, insbesondere durch Regeleinrichtungen mit PI-, bzw PID-Verhalten kann hierbei die Überschwingweite in beiden Heizphasen optimiert werden.

Je nach dem vorliegenden Heizungssystem, seiner thermischen Leistung, den baulichen Gegebenheiten, insbesondere dem K-Wert und dem Wärmespeichervermögen der Wände, sowie weiteren Einflußgrößen wie Belüftung, Bestrahlung, Inneneinrichtung, Vorliegen von Fremdwärmequellen im Raum, Außentemperaturen udgl, stellt sich im quasistationären Regelbetrieb eine bleibende Temperatur- differenz zwischen Raumlufttemperatur und Wandoberflächentempe- ratur ein, die im allgemeinen im Bereich von 1 bis 2 K liegt; diese Temperaturdifferenz wird bei den eingesetzten Regeleinrichtungen im Reglerprogramm entsprechend berücksichtigt und kann auch vorzugsweise parametrisch bzw frei wählbar vorgesehen sein, um maximale Flexibilität der Vorrichtung für breitestmöglichen Einsatz zu gewährleisten.

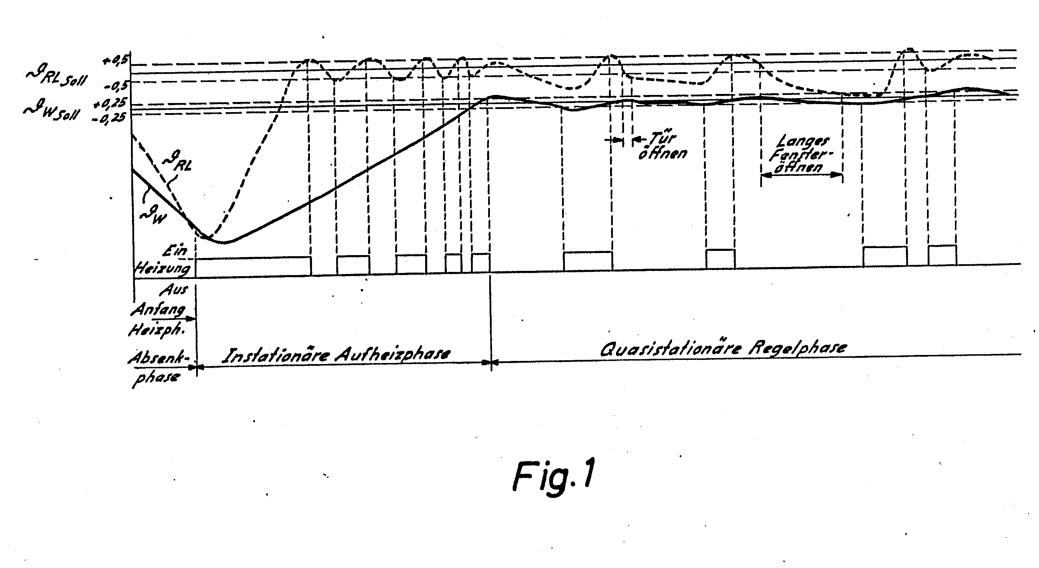

Die Arbeitsweise des erfindungsgemäßen Verfahrens ist in Fig. 1 anhand eines typischen Temperatur-Zeit-Diagramms eines nicht innengedämmten Raums für eine Absenkphase, eine sich daran anschließende instationäre Aufheizphase und die darauf folgende quasistationäre Regelphase dargestellt.

Die Raumluft-Solltemperatur $\vartheta_{RLsoll}$ liegt um eine fest vorgegebene Temperaturdifferenz über der Wandoberflächen- Solltemperatur $\vartheta_{Wsoll}$. Die Hysterese der Raumlufttemperatur $\vartheta_{RL}$ beträgt ± 0,5 K, die der Wandoberflächentemperatur $\vartheta_{N}$ ± 0,25 K.

Während der instationären Aufheizphase erfolgt die Regelung der Raumlufttemperatur mit einer Genauigkeit von ± 0,5 K so lange, bis die Wandoberflächentemperatur $\vartheta_{W}$ 0,25 K über ihrem Sollwert $\vartheta_{Wsoll}$ liegt. Die Zufuhr von Heizenergie wird also schon unterbunden, wenn die Wandoberflächentemperatur $\vartheta_{W}$ den vorgegebenen Sollwert erreicht hat, obwohl die Raumluft- temperatur $\vartheta_{RL}$ noch innerhalb der Schalthysterese liegt.

Während der quasistationären Regelphase wird andererseits die Zufuhr von Heizenergie erst durch Unterschreiten des Wandtemperatursollwertes um 0,25 K freigegeben. Die Abschaltung der Energiezufuhr erfolgt dann wieder abhängig von der Raumlufttemperatur $\vartheta_{RL}$, und zwar auch dann, wenn die Wandoberflächentemperatur noch innerhalb der Schalthysterese liegt.

Erreicht jedoch die Wandoberflächentemperatur $\vartheta_W$ schon vor der Raumlufttemperatur $\vartheta_{RL}$ ihren Sollwert, wird bereits dann die Wärmequelle abgeschaltet.

Lediglich dann, wenn die Raumlufttemperatur aus irgendeinem Grund für eine hinreichend lange Zeitdauer unter eine zulässige Mindesttemperatur abfällt (Unterschreiten der Untergrenze der Wandoberflächentemperatur), setzt dementsprechend die Regelung ein und gleicht den aufgetretenen Energieverlust durch Gegenheizen in üblicher Weise unter Bezug auf die Raumlufttemperatur als Regelgröße wieder aus, bis die Raumlufttemperatur wieder einen Wert erreicht hat, der hinreichend oberhalb der Wandoberflächentemperatur liegt.

Die eingestellte Wandoberflächen-Solltemperatur wird mit der angegebenen Genauigkeit von $\pm$ 0,25 K eingehalten.

Der Maximalwert der Raumlufttemperatur ($\vartheta_{RLsoll}$ + 0,5 K) wird auf keinen Fall überschritten.

Der Minimalwert der Raumlufttemperatur kann unterschritten werden, solange die Wandoberflächentemperatur innerhalb der Hysterese liegt.

Besondere Vorteile des erfindungsgemäßen Regelungskonzepts sind, daß kurzzeitiges Absinken der Raumlufttemperatur zB durch Fenster- bzw Türöffnen noch nicht zu einer erneuten Energiezufuhr führt und ferner die Speicherkapazität der Wände in optimaler Weise ausgenutzt wird, was bei einer Mittelwertbildung auch bei Gewichtung nicht der Fall ist.

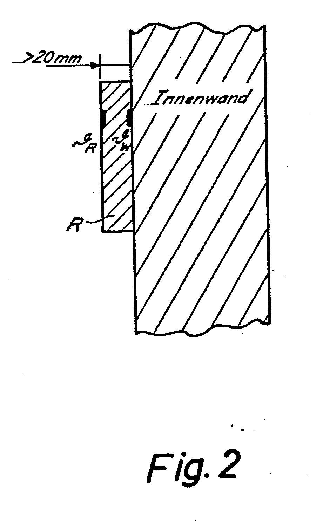

Fig. 2 ist die Fühleranordnung einer erfindungsgemäßen Vorrichtung schematisch dargestellt. Dabei liegt die Erkenntnis zugrunde, daß die Temperaturverhältnisse in einem Abstand von etwa 20 mm von der Wandoberfläche, insbesondere bei einer für die Temperaturverhältnisse repräsentativen Innenwand, annähernd die gleichen sind wie in der Raummitte, was eine räumliche Integration des Raumlufttemperaturfühlers mit dem Wandoberflächentemperaturfühler ermöglicht, die aus konstruktiven Gründen besonders günstig und zugleich besonders einfach ist. Der Temperaturfühler $\vartheta_W$ zur Messung der Wandoberflächentemperatur liegt bei der in Fig. 2 dargestellten Vorrichtung unmittelbar an der Wandoberfläche an; der Raumlufttemperaturfühler befindet sich in einem Abstand von einigen cm vom Wandoberflächentemperaturfühler und ist etwa 20 mm von der Wandoberfläche beabstandet. Durch entsprechende Gehäuseausbildung ist für geeignete Belüftung des Raumlufttemperaturfühlers gesorgt. Besonders günstig ist die gleichzeitige Integration beider Fühler in einem gemeinsamen Gehäuse eines Regelgeräts, das auch die erforderliche Regelelektronik enthält, so daß lediglich eine Leitung zum Heizkessel oder zu einem Stellglied für die Wärmequelle erforderlich ist.

Das Erfindungskonzept eignet sich zur Anwendung auf beliebige Systeme zur Raumheizung und Raumkühlung, auch zur Ansteuerung von Thermostatventilen, Mischventilen und Fußbodenheizsystemen einschließlich Elektroheizungen sowie für mono- und bivalente Wärmepumpenanlagen.

Durch die Erfindungskonzeption wird ein besonders gleichmäßiger zeitlicher Temperaturverlauf erzielt, wobei zugleich relevante Energieeinsparungen möglich sind, da kurzzeitige, etwa durch Lüften oder Türöffnen bedingte Absenkungen der Raumlufttemperatur nicht sogleich zu einem Gegenheizen oder Gegenkühlung führen, was bei der herkömmlichen Zweifühlerkonzeption auch durch Gewichtung der beiden Temperaturmeßwerte nicht erreicht werden konnte.

Ansprüche

1. Verfahren zur Einzelraumtemperaturregelung

durch Heizung

in Räumen mit einer regelbaren Wärmequelle

durch

- Messung der Raumlufttemperatur sowie der Wandoberflächentemperatur,

- Erzeugung einer Regelgröße unter Berücksichtigung der gemessenen Raumlufttemperatur und der gemessenen Wandoberflächentemperatur

und

- Regelung der Wärmequelle über diese Regelgröße,

d a d u r c h   g e k e n n z e i c h n e t ,  daß

(A) in der nichtstationären Aufheizphase die Raumlufttemperatur
unter Vorgabe einer über der anfänglichen Wandoberflächentemperatur liegenden Raumluft-Solltemperatur als Regelgröße
herangezogen wird,
bis die Wandoberflächentemperatur nur noch höchstens um eine
vorgegebene Temperaturdifferenz niedriger ist als die
Raumluft-Solltemperatur,

und

(B) in der anschließenden quasistationären Regelphase

die Wandoberflächentemperatur unter Vorgabe einer Wandoberflächen-Solltemperatur als Regelgröße verwendet
und die Wärmequelle dann eingeschaltet wird, wenn die
Wandoberflächentemperatur unterhalb der Untergrenze
der Schalthysterese liegt, und die Wärmequelle dann abgeschaltet wird, wenn die Raumlufttemperatur die Obergrenze der Schalthysterese überschreitet, bzw wenn die
Wandoberflächentemperatur schon vor der Raumlufttemperatur
ihren Sollwert erreicht hat.

2. Verfahren zur Einzelraumtemperaturregelung

durch Kühlung

in Räumen mit einer regelbaren Kältequelle

durch

- Messung der Raumlufttemperatur sowie der Wandoberflächentemperatur,

- Erzeugung einer Regelgröße unter Berücksichtigung der gemessenen Raumlufttemperatur und der gemessenen Wandoberflächentemperatur

  und

- Regelung der Kältequelle über diese Regelgröße,

d a d u r c h   g e k e n n z e i c h n e t , daß

(A) in der nichtstationären Kühlphase die Raumlufttemperatur
    unter Vorgabe einer unter der anfänglichen Wandoberflächentemperatur liegenden Raumluft-Solltemperatur als Regelgröße
    herangezogen wird,
    bis die Wandoberflächentemperatur nur noch höchstens um
    eine vorgegebene Temperaturdifferenz höher ist als die
    Raumluft-Solltemperatur,

und

(B) in der anschließenden quasistationären Regelphase

die Wandoberflächentemperatur unter Vorgabe einer Wandoberflächen-Solltemperatur als Regelgröße verwendet und die Kältequelle dann eingeschaltet wird, wenn die Wandoberflächentemperatur oberhalb der Obergrenze der Schalthysterese liegt, und die Kältequelle dann abgeschaltet wird, wenn die Raumlufttemperatur die Untergrenze der Schalthysterese unterschreitet bzw wenn die Wandoberflächentemperatur schon vor der Raumlufttemperatur ihren Sollwert erreicht hat.

3. Verfahren nach Anspruch 1 oder 2, dadurch gekennzeichnet, daß als Temperaturdifferenz in Schritt (A) diejenige mittlere Temperaturdifferenz vorgegeben wird, die sich aufgrund der vorliegenden Wärme- bzw Kältequelle, der baulichen Gegebenheiten, der Wände und der Raumeinrichtung im quasistationären Zustand bei Verwendung der Raumlufttemperatur als Regelgröße zwischen der Raumluft-Solltemperatur und der Wandoberflächentemperatur ergibt.

4. Verfahren nach einem der Ansprüche 1 bis 3, dadurch gekennzeichnet, daß als Temperaturdifferenz in Schritt (A) eine Temperaturdifferenz zwischen der Raumluft-Solltemperatur und im Fall der Heizung der Obergrenze und im Fall der Kühlung der Untergrenze der Schalthysterese der Stellgröße vorgegeben wird.

5. Verfahren nach Anspruch 4, dadurch gekennzeichnet, daß eine Schalthysterese der Raumlufttemperatur von ± 0,5 K um die Raumluft-Solltemperatur und eine Schalthysterese der Wandoberflächentemperatur von ± 0,25 K um die Wandoberflächen-Solltemperatur vorgegeben werden.

6. Verfahren nach einem der Ansprüche 1 bis 5, dadurch gekennzeichnet, daß die erste Temperaturdifferenz zu 1 bis 2 K vorgegeben wird.

7. Verfahren nach einem der Ansprüche 1 bis 6, dadurch gekennzeichnet, daß ein Regler mit P-, PI- oder PID-Verhalten verwendet wird.

8. Vorrichtung zur Durchführung des Verfahrens nach einem der Ansprüche 1 bis 7

   mit

   einem Raumlufttemperaturfühler, der die Temperatur der Raumluft erfaßt,

   einem Wandoberflächentemperaturfühler, der die Temperatur der Wandoberfläche erfaßt,

   und einer Regeleinrichtung, die aufgrund der durch den Raumlufttemperaturfühler und den Wandoberflächentemperaturfühler erfaßten Temperaturmeßwerte als Regelausgang eine Stellgröße liefert, mit der eine Wärme- und/oder Kältequelle ansteuerbar ist,

   d a d u r c h   g e k e n n z e i c h n e t ,  daß

   (1) der Raumlufttemperaturfühler ($\vartheta_R$) und der Wandoberflächentemperaturfühler ($\vartheta_W$) in räumlicher Nähe zueinander vorgesehen sind,

   (2) der Raumlufttemperaturfühler ($\vartheta_R$) in einem Abstand von etwa 20 mm von der Wandoberfläche vorgesehen ist,

   (3) der Wandoberflächentemperaturfühler ($\vartheta_W$) unmittelbar auf der Wandoberfläche anliegend vorgesehen ist

   und

   (4) die Regeleinrichtung so ausgebildet ist, daß sie

      (A) in der nichtstationären Aufheiz- bzw Kühlphase die Raumlufttemperatur unter Vorgabe einer Raumluft-Solltemperatur als Regelgröße verwendet, bis die Wandoberflächentemperatur im Fall der Heizung höchstens um eine vorgegebene Temperaturdifferenz niedriger und im Fall der Kühlung höchstens um eine vorgegebene Temperaturdifferenz höher ist als die Raumluft-Solltemperatur,

und

(B) in der anschließenden quasistationären Regelphase

die Wandoberflächentemperatur unter Vorgabe einer Wandoberflächen-Solltemperatur als Regelgröße verwendet und die Wärmequelle bzw Kältequelle dann eingeschaltet wird, wenn die Wandoberflächentemperatur im Fall der Heizung unterhalb der Untergrenze und im Fall der Kühlung oberhalb der Obergrenze der Schalthysterese liegt, und die Wärmequelle bzw Kältequelle dann abgeschaltet wird, wenn die Raumlufttemperatur im Fall der Heizung die Obergrenze der Schalthysterese überschreitet und im Fall der Kühlung die Untergrenze der Schalthysterese unterschreitet bzw in beiden Fällen wenn die Wandoberflächentemperatur schon vor der Raumlufttemperatur ihren Sollwert erreicht hat.

9. Vorrichtung nach Anspruch 8, dadurch gekennzeichnet, daß die vorgegebene Temperaturdifferenz bei Schritt (A) 1 bis 2 K beträgt.

10. Vorrichtung nach Anspruch 8 oder 9, dadurch gekennzeichnet, daß die Schalthysterese der Raumlufttemperatur ± 0,5 K um die Raumluft-Solltemperatur und die Schalthysterese der Wandoberflächentemperatur ± 0,25 K um die Wandoberflächen-Solltemperatur betragen.

11. Vorrichtung nach einem der Ansprüche 8 bis 10, dadurch gekennzeichnet, daß die Regeleinrichtung ein P-, PI- oder PID-Regler ist.

12. Vorrichtung nach einem der Ansprüche 8 bis 11, dadurch gekennzeichnet, daß die Regeleinrichtung mikroprozessorgesteuert ist und ein Erkennungs- und Umschaltprogramm für die Eingänge des Raumluft-

0119313

- 6 -

temperaturfühlers und des Wandoberflächentemperaturfühlers zur Erzeugung der Stellgröße in Abhängigkeit von den verschiedenen Betriebsbedingungen aufweist.

13. Vorrichtung nach einem der Ansprüche 8 bis 12, dadurch gekennzeichnet, daß der Raumlufttemperaturfühler und der Wandoberflächentemperaturfühler innerhalb des gleichen Gehäuses in einem Abstand von einigen cm voneinander vorgesehen sind.

Fig.1

>20 mm

Innenwand

$\vartheta_R$   $\vartheta_W$

R

212

0119313

Fig. 2